# EUROPEAN PATENT SPECIFICATION

(11) **EP 3 651 177 B1**
(45) Date of publication and mention of the grant of the patent: **06.07.2022**
(21) Application number: 18827410.4
(22) Date of filing: 15.05.2018
(51) Int. Cl.: H01H 21/08, B62D 25/12, H01H 9/04, H01H 21/28

(54) **SWITCH DEVICE AND OPENING/CLOSING DETECTION DEVICE**
SCHALTVORRICHTUNG UND ÖFFNUNGS-/SCHLIESSDETEKTIONSVORRICHTUNG
DISPOSITIF DE COMMUTATION ET DISPOSITIF DE DÉTECTION D'OUVERTURE/FERMETURE

(30) Priority: 07.07.2017 JP 2017134099
(43) Date of publication of application: 13.05.2020
(73) Proprietor: Alps Alpine Co., Ltd., Tokyo 145-8501 (JP)
(72) Inventor: HATAKEYAMA, Atsushi, Tokyo 145-8501 (JP); TAKEDA, Masayuki, Tokyo 145-8501 (JP)
(74) Representative: Maiwald Patent- und Rechtsanwaltsgesellschaft mbH
(86) International application number: PCT/JP2018/018786
(87) International publication number: WO 2019/008911

(56) References cited:
- DE-A1- 2 742 749
- JP-A- 2004 193 496
- JP-A- 2013 225 423
- JP-A- 2014 197 561
- JP-A- 2017 053 119
- JP-B2- 5 497 536
- JP-U- S6 046 619
- JP-U- S6 177 516
- JP-U- S6 230 386
- JP-Y2- S5 152 055
- JP-Y2- S5 152 055

## Description

### Technical Field

The present invention relates to a switch device and an open-close detector.

### Background Art

A switch device that is installed in proximity to an object in a vehicle, such as a car, and is capable of detecting a state of the object is known in the art. For example, such a switch device can be installed in proximity to the bonnet or hood of a vehicle to detect an open or closed state of the bonnet or hood. In such a case where the switch device is installed outside the interior of the vehicle, the switch device may be required to be waterproof in order to prevent malfunction or failure of the switch device.

For example, PTL 1 discloses a technique for a switch device. The technique includes fitting a switch body into a holder and filling a sealant receiving portion located under the switch body with a sealant to seal joints (solder joints) between terminals of the switch body and lead terminals protruding from the holder and to make the joints waterproof.

As another example, document JP S51 52055 Y2 discloses a small-sized switch with a switch body and a socket section. Insertion terminals of the switch body are to be inserted into insertion holes of the socket section. Moreover, a seal member made of an elastic body is to be arranged between the switch body and the socket section.

### Citation List

### Patent Literature

PTL 1: Japanese Patent No. 5497536

### Summary of Invention

### Technical Problem

The above-described technique disclosed in PTL 1 involves an operation of soldering the terminals of the switch body and the lead terminals protruding from the holder and an operation of filling the sealant receiving portion with the sealant. These operations require certainty as well as time and effort. It is difficult to achieve highly reliable waterproof performance at a lower production cost by using the above-described technique disclosed in PTL 1. Under such circumstances, there is the need to provide a switch device that exhibits highly reliable waterproof performance achieved at a lower production cost.

### Solution to Problem

A switch device according to an embodiment includes a housing including a receiving portion having an opening at the top of the receiving portion, a switch body received in the receiving portion, and a sealing member sandwiched between the bottom of the receiving portion and the bottom of the switch body. In the receiving portion, a terminal located on the bottom of the switch body and a terminal exposed in a hole of the bottom of the receiving portion are electrically and physically connected to each other through a hole of the sealing member.

### Advantageous Effects of Invention

According to the embodiment, the switch device that exhibits highly reliable waterproof performance achieved at a lower production cost can be provided.

### Brief Description of Drawings

[Fig. 1] Fig. 1 is a perspective view of the appearance of a switch device in accordance with an embodiment.
[Fig. 2] Fig. 2 is an exploded perspective view of the switch device in accordance with an embodiment.
[Fig. 3] Fig. 3 is an enlarged view illustrating part of a housing included in the switch device in accordance with an embodiment.
[Fig. 4] Fig. 4 is an enlarged view illustrating the part of the housing included in the switch device in accordance with an embodiment.
[Fig. 5] Fig. 5 is an enlarged view illustrating the part of the housing included in the switch device in accordance with an embodiment.
[Fig. 6] Fig. 6 is a perspective view of the appearance of a sealing member included in the switch device in accordance with an embodiment.
[Fig. 7] Fig. 7 is a diagram illustrating the sealing member and a switch body, which are included in the switch device in accordance with an embodiment, assembled to each other.
[Fig. 8] Fig. 8 is a diagram illustrating connection structures of terminals in the switch device in accordance with an embodiment.
[Fig. 9A] Fig. 9A is a diagram illustrating an exemplary operation of fitting the switch body in the switch device in accordance with an embodiment.
[Fig. 9B] Fig. 9B is a diagram illustrating the exemplary operation of fitting the switch body in the switch device in accordance with an embodiment.
[Fig. 9C] Fig. 9C is a diagram illustrating the exemplary operation of fitting the switch body in the switch device in accordance with an embodiment.
[Fig. 10A] Fig. 10A is a diagram illustrating an exemplary operation of fitting a retainer in the switch device in accordance with an embodiment.
[Fig. 10B] Fig. 10B is a diagram illustrating the exemplary operation of fitting the retainer in the switch device in accordance with an embodiment.
[Fig. 11] Fig. 11 is a perspective view of the appearance of an open-close detector including the switch device in accordance with an embodiment (in a state in which a bonnet or hood is closed).
[Fig. 12] Fig. 12 is a perspective view of the appearance of the open-close detector including the switch device in accordance with an embodiment (in a state in which the bonnet or hood is opened).

### Description of Embodiments

Embodiments will be described with reference to the drawings.

### [Configuration of Switch Device 100]

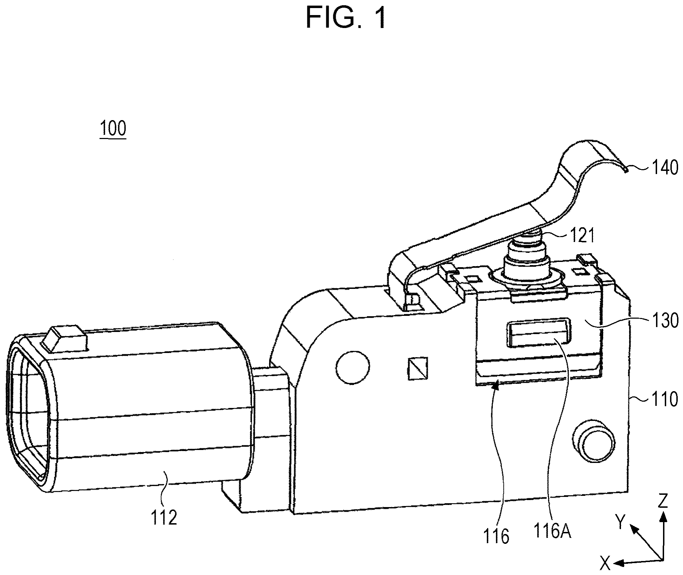

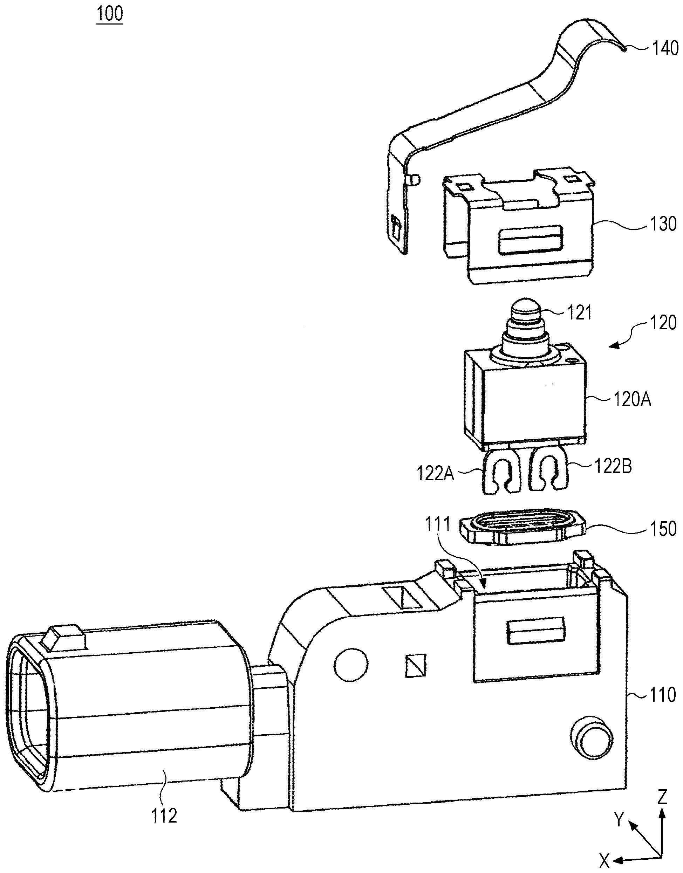

Fig. 1 is a perspective view of the appearance of a switch device 100 in accordance with an embodiment. Fig. 2 is an exploded perspective view of the switch device 100 in accordance with an embodiment. In the following description, for the sake of convenience, it is assumed that the Z-axis direction in the figures is a vertical direction. The switch device 100 of Fig. 1 is a switch device for a vehicle. The switch device 100 is switchable between an ON state and an OFF state in response to the motion of an object included in the vehicle. Thus, the switch device 100 can detect a state of the object. The switch device 100 is waterproof and thus can be used outside the interior of the vehicle.

For example, the switch device 100 can be used as a detector to detect an open or closed state of, for example, the bonnet or hood, a door, or the boot or trunk lid of the vehicle.

As illustrated in Figs. 1 and 2, the switch device 100 includes a housing 110, a switch body 120, a retainer 130, a lever 140, and a sealing member 150.

The housing 110 is a molded member made of a hard insulating material (e.g., resin). The other components (i.e., the switch body 120, the retainer 130, the lever 140, and the sealing member 150) are fitted in or to the housing 110. The housing 110 includes a receiving portion 111 and a connector portion 112. The receiving portion 111 has a shape like a container having an opening at its top, and is to receive the switch body 120 through the opening. The receiving portion 111 has therein a substantially rectangular cuboid space that fits the outer shape of a casing 120A of the switch body 120. The connector portion 112 is used to electrically connect the switch device 100 to a wiring line extending from the vehicle and is connected to a connector (not illustrated) included in the wiring line extending from the vehicle. The housing 110 except the receiving portion 111 has a shape suitable for the type of vehicle or a target object to be detected. In other words, the components except the housing 110 of the switch device 100 according to the embodiment can be shared by multiple types of vehicles or multiple target objects.

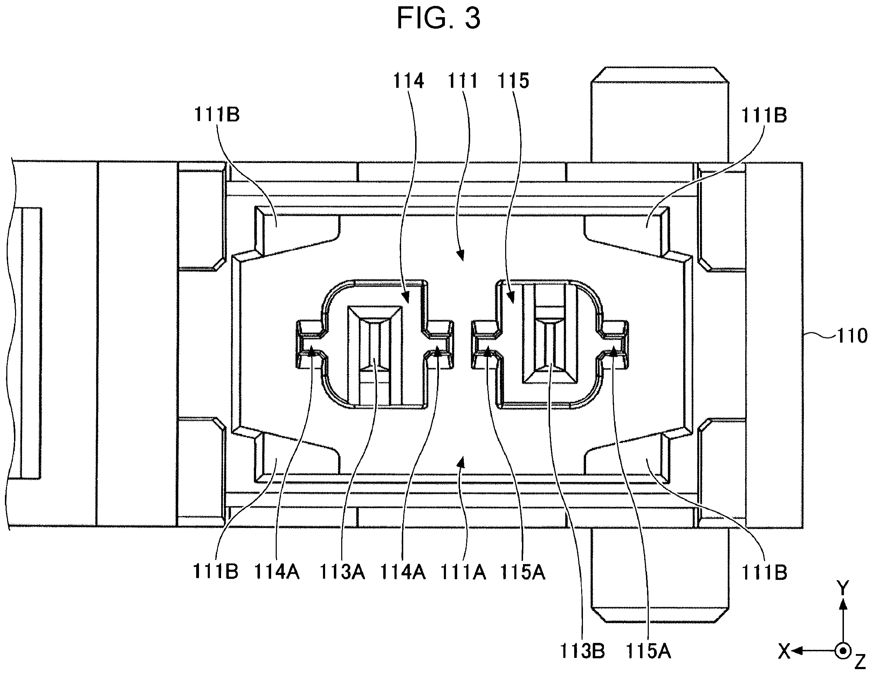

The switch body 120 is received in the receiving portion 111 of the housing 110. The switch body 120 includes the casing 120A, a button 121, a terminal 122A, and a terminal 122B. The terminal 122A and the terminal 122B are flat members protruding from the bottom of the casing 120A of the switch body 120. The terminal 122A and the terminal 122B are electrically and physically connected respectively to a terminal 113A and a terminal 113B (refer to Fig. 3), which are exposed in a hole 114 and a hole 115 arranged in the bottom of the receiving portion 111 of the housing 110. The terminal 122A and the terminal 122B are made of a hard conductive material (e.g., metal). The button 121, which protrudes from the top of the casing 120A of the switch body 120, is a member that can be pressed to switch the switch body 120 between the ON state and the OFF state. For example, when the button 121 is pressed, the switch body 120 is switched to the ON state (that is, in which the terminal 122A and the terminal 122B are in a conduction state). When the button 121 is released from a pressed state, the switch body 120 is switched to the OFF state (that is, in which the terminal 122A and the terminal 122B are not in the conduction state).

The retainer 130 is a member formed by processing a thin metal workpiece. The retainer 130 covers the switch body 120 received in the receiving portion 111, fits opposite sides of the receiving portion 111, and is thus fixed to the housing 110. Consequently, the retainer 130 fixes the switch body 120 received in the receiving portion 111 while pressing the switch body 120 from above.

The lever 140, which is a member formed by processing a thin metal workpiece, has a first end supported by the housing 110 and extends over the button 121 of the switch body 120. The lever 140 has a second end. When the second end is operated from the outside, or pressed downward, the button 121 of the switch body 120 can be pressed downward. The lever 140 can have a shape suitable for the type of vehicle or a target object.

The sealing member 150, which is a substantially flat elastic member, is sandwiched between the bottom of the receiving portion 111 and the bottom of the casing 120A of the switch body 120. The sealing member 150 closes a gap between the bottom of the receiving portion 111 and the bottom of the casing 120A of the switch body 120 to prevent foreign matter (e.g., a water droplet and dust) from entering the holes 114 and 115. The sealing member 150 is made of an elastic material (e.g., rubber). The sealing member 150 has a hole 151 that allows the terminal 122A and the terminal 122B of the switch body 120 to extend therethrough. Consequently, in the receiving portion 111 of the housing 110, the terminals 122A and 122B of the switch body 120 and the terminals 113A and 113B exposed in the bottom of the receiving portion 111 can be connected to each other through the hole 151 of the sealing member 150.

### [Structure of Receiving Portion 111]

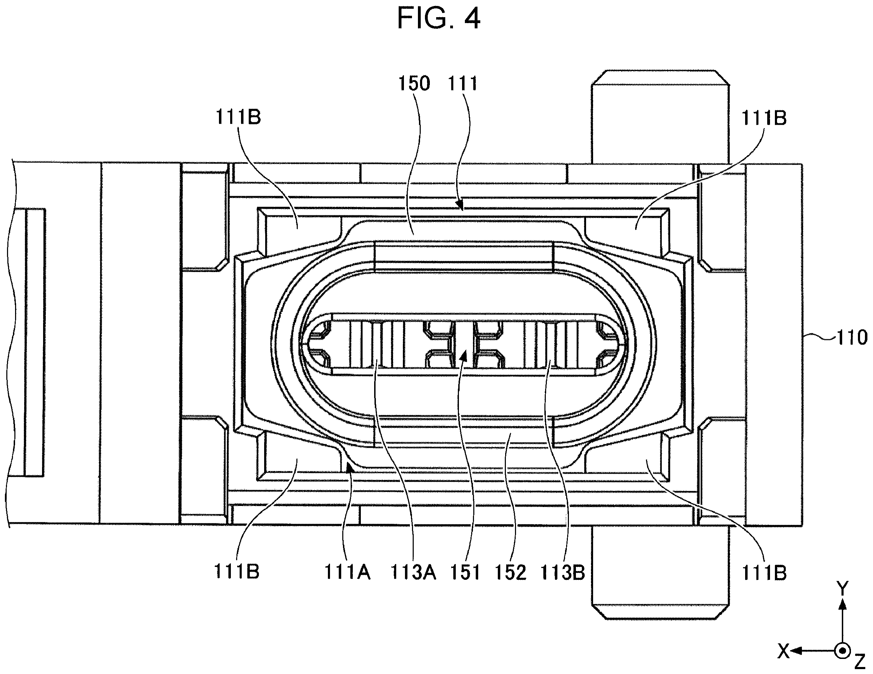

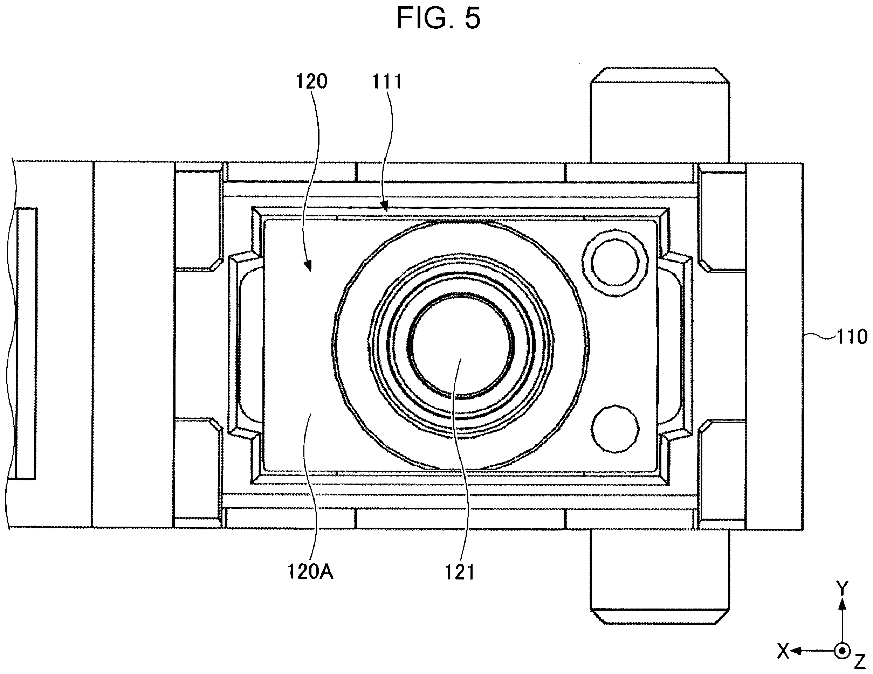

Figs. 3 to 5 are enlarged views illustrating part of the housing 110 included in the switch device 100 in accordance with an embodiment. Fig. 3 illustrates, to a larger scale, the receiving portion 111 in which the switch body 120 and the sealing member 150 are not received. Fig. 4 illustrates, to a larger scale, the receiving portion 111 in which only the sealing member 150 is received. Fig. 5 illustrates, to a larger scale, the receiving portion 111 in which both the switch body 120 and the sealing member 150 are received.

As illustrated in Fig. 3, the receiving portion 111 has the two holes 114 and 115 in the bottom. The terminal 113A is exposed in the hole 114. The terminal 113B is exposed in the hole 115. The terminal 113A is to be connected to the terminal 122A of the switch body 120. The terminal 113A is electrically and physically connected to one of two terminals included in the connector portion 112 in the housing 110. The terminal 113B is to be connected to the terminal 122A of the switch body 120. The terminal 113B is electrically and physically connected to the other one of the two terminals included in the connector portion 112 in the housing 110.

As illustrated in Fig. 3, the hole 114 includes a guide groove 114A having substantially the same shape (i.e., a transversely elongated rectangular shape) as the outer shape of the flat terminal 122A of the switch body 120. The guide groove 114A ensures that the terminal 122A of the switch body 120 is easily guided to a predetermined connection position on the terminal 113A exposed in the hole 114. Similarly, the hole 115 includes a guide groove 115A having substantially the same shape (i.e., a transversely elongated rectangular shape) as the outer shape of the flat terminal 122B of the switch body 120. The guide groove 115A ensures that the terminal 122B of the switch body 120 is easily guided to a predetermined connection position on the terminal 113B exposed in the hole 115. In particular, each of the guide grooves 114A and 115A is tapered such that its opening decreases in size downward. This enhances the ease and reliability of insertion of the terminals 122A and 122B into the guide grooves 114A and 115A.

As illustrated in Figs. 3 and 4, the bottom of the receiving portion 111 has a recess 111A having substantially the same shape (i.e., a substantially cruciform shape) as the outer shape of the sealing member 150 in plan view. As illustrated in Fig. 4, the sealing member 150 is placed in the recess 111A. Thus, the sealing member 150 is positioned by an inner wall surface of the recess 111A in the receiving portion 111. The sealing member 150 can be easily and reliably placed at a predetermined position in a predetermined orientation. In the receiving portion 111, the placement of the sealing member 150 in the recess 111A can prevent the sealing member 150 from being shifted and rotated.

As illustrated in Figs. 3 and 4, the bottom of the receiving portion 111 includes seats 111B, each having a flat surface, in portions (i.e., four corners) other than the recess 111A. Each seat 111B has a height slightly smaller than the thickness of the sealing member 150. Thus, the sealing member 150 placed in the recess 111A slightly protrudes higher than the seats 111B. Consequently, when the switch body 120 is pressed in the receiving portion 111, the bottom of the casing 120A of the switch body 120 comes into contact with the sealing member 150. Then, when the sealing member 150 is pressed to some extent, the bottom of the casing 120A of the switch body 120 comes into contact with the seats 111B. Thus, the seats 111B inhibit downward movement of the switch body 120, so that the switch body 120 is positioned at a predetermined level while being connected to the terminals 113A and 113B and pressing the sealing member 150 to some extent.

As illustrated in Fig. 4, the sealing member 150 placed in the receiving portion 111 has the hole 151, which allows the terminal 122A and the terminal 122B of the switch body 120 to extend therethrough. Consequently, in the receiving portion 111, the terminals 122A and 122B of the switch body 120 and the terminals 113A and 113B exposed in the holes 114 and 115 are electrically and physically connected to each other through the hole 151 of the sealing member 150.

As illustrated in Fig. 5, the opening of the receiving portion 111 has a substantially rectangular shape, which is substantially the same as the outer shape of the casing 120A of the switch body 120. Consequently, when the switch body 120 is inserted into the receiving portion 111, the switch body 120 is positioned horizontally (in the X-axis and Y-axis directions in the figures) by an inner wall surface of the receiving portion 111. Thus, while the switch body 120 is being moved downward in the receiving portion 111, the inner wall surface of the receiving portion 111 restricts horizontal movement of the switch body 120 such that the switch body 120 can be maintained in a constant horizontal position. This ensures that the terminals 122A and 122B of the switch body 120 easily extend through the hole 151 of the sealing member 150 in the receiving portion 111. In other words, the terminals 122A and 122B can be prevented from touching a portion other than the hole 151 of the sealing member 150 to shift the sealing member 150. As illustrated in Figs. 3 to 5, a peripheral end portion of the opening of the receiving portion 111 is tapered such that the opening decreases in size downward. This enhances the ease and reliability of insertion of the switch body 120 into the receiving portion 111.

### [Sealing Member 150]

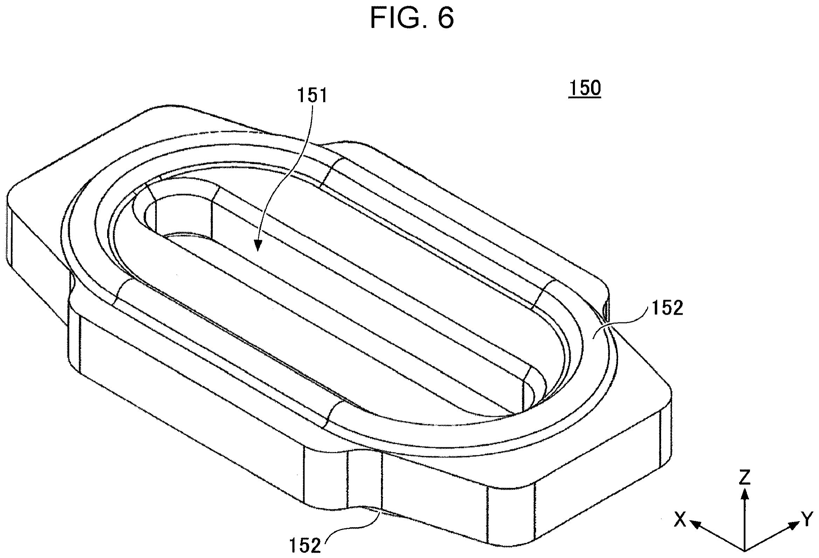

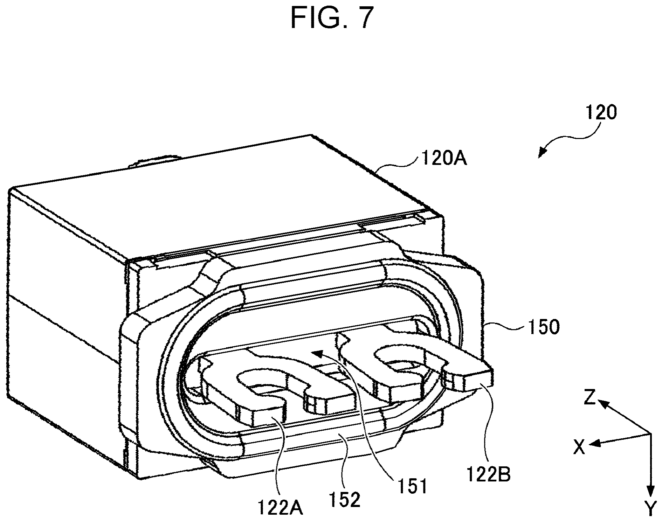

Fig. 6 is a perspective view of the appearance of the sealing member 150 included in the switch device 100 in accordance with an embodiment. Fig. 7 is a diagram illustrating the sealing member 150 and the switch body 120, which are included in the switch device 100 in accordance with an embodiment, assembled to each other.

As illustrated in Fig. 6, the outer shape of the sealing member 150 in plan view is substantially cruciform. Consequently, as illustrated in Fig. 4, the sealing member 150 can be placed in the recess 111A having the same shape, or cruciform shape, located in the bottom of the receiving portion 111 of the housing 110. Thus, the sealing member 150 is positioned by the inner wall surface of the recess 111A in the receiving portion 111. The sealing member 150 can be easily and reliably placed at a predetermined position in a predetermined orientation. In addition, the sealing member 150 can be prevented from being shifted and rotated in the receiving portion 111.

As illustrated in Fig. 6, the sealing member 150 has the hole 151 that allows the terminals 122A and 122B protruding from the bottom of the casing 120A of the switch body 120 to extend therethrough. In an example illustrated in Fig. 6, the hole 151 has a transversely oriented elliptical shape suitable for the arrangement and shape of the terminals 122A and 122B.

A dimension of the hole 151 in its lateral direction (the Y-axis direction in the figures) is slightly larger than the thickness of the terminals 122A and 122B. A dimension of the hole 151 in its longitudinal direction (the X-axis direction in the figures) is slightly larger than a maximum dimension of the arrangement of the terminals 122A and 122B in this direction (or dimension of the arrangement of the terminals 122A and 122B pressed apart by the terminals 113A and 113B fitted in the respective terminals). As illustrated in Fig. 7, the hole 151 with these dimensions allows the terminals 122A and 122B to extend therethrough without touching the sealing member 150. This ensures that the terminals 122A and 122B easily extend through the hole 151 without shifting the sealing member 150 in the receiving portion 111.

As illustrated in Figs. 6 and 7, the sealing member 150 has circular protrusions 152 surrounding the hole 151 on opposite surfaces thereof. When the sealing member 150 is sandwiched between the bottom of the casing 120A of the switch body 120 and the bottom of the receiving portion 111 of the housing 110, the protrusion 152 on a front surface of the sealing member 150 comes into contact with the bottom of the casing 120A of the switch body 120 and the protrusion 152 on a rear surface of the sealing member 150 comes into contact with the bottom of the receiving portion 111. This results in a reduction in area of contact between the sealing member 150 and each of the bottom of the casing 120A of the switch body 120 and the bottom of the receiving portion 111. Consequently, when the sealing member 150 is sandwiched between the bottom of the casing 120A of the switch body 120 and the bottom of the receiving portion 111, the protrusions 152 reliably seal the periphery of the hole 151 and reduce reaction force that is applied to the switch body 120 from the sealing member 150. In other words, the protrusions 152 can reduce a pressing force required to press the switch body 120 and reduce or eliminate the occurrence of an accident, for example, the likelihood that the switch body 120 may fall off due to an excessive reaction force from the sealing member 150.

The protrusions 152 also surround the two holes 114 and 115 (refer to Figs. 3 and 4) arranged in the bottom of the receiving portion 111 of the housing 110. Thus, the protrusions 152 seal the peripheries of the two holes 114 and 115 in the bottom of the receiving portion 111 to prevent foreign matter (e.g., a water droplet and dust) from entering the holes 114 and 115.

One surface and the other surface of the sealing member 150 are of symmetrical configuration. Thus, an operator can easily fit the sealing member 150 into the receiving portion 111 of the housing 110 without paying attention to the orientations of the surfaces of the sealing member 150.

The sealing member 150 is line-symmetric in the longitudinal direction (the X-axis direction in the figures) and is also line-symmetric in the lateral direction (the Y-axis direction in the figures). Thus, the operator can easily fit the sealing member 150 into the receiving portion 111 of the housing 110 while paying attention only to the longitudinal direction and the lateral direction of the sealing member 150.

### [Connection Structures of Terminals]

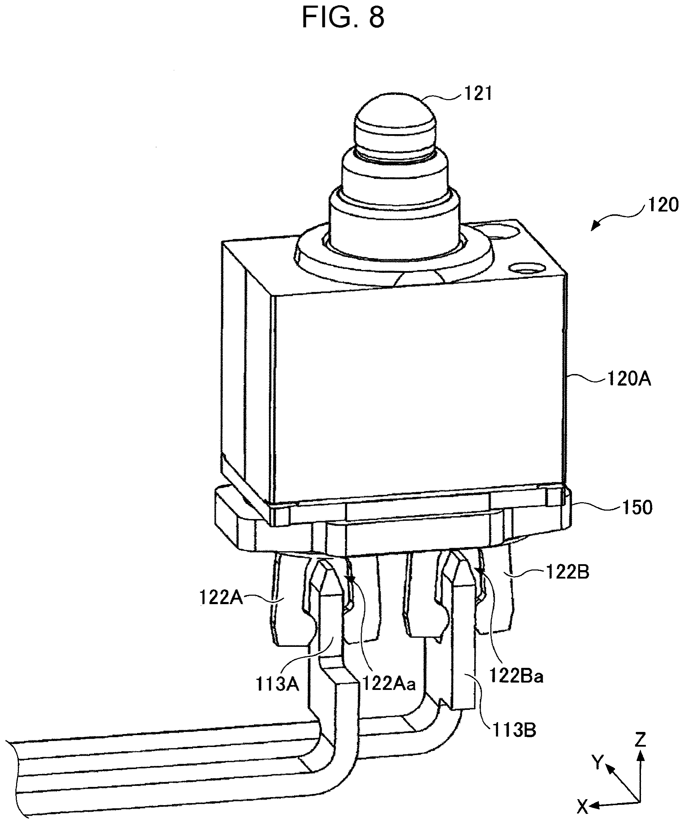

Fig. 8 is a diagram illustrating connection structures of the terminals in the switch device 100 in accordance with an embodiment. As illustrated in Fig. 8, the terminals 122A and 122B protruding from the bottom of the casing 120A of the switch body 120 and the terminals 113A and 113B arranged in the housing 110 are flat members orthogonal to each other. The terminal 122A has a notch 122Aa having an opening in a free end of the terminal 122A, and the terminal 122B has a notch 122Ba having an opening in a free end of the terminal 122B. Thus, the terminals 122A and 122B are substantially U-shaped. As illustrated in Fig. 8, the terminals 113A and 113B are fitted in the notches 122Aa and 122Ba of the terminals 122A and 122B, respectively. The opening of each notch has a width smaller than the thickness of the terminal 113A or 113B while the terminal 113A or 113B is not fitted in the notch. Therefore, the terminals 113A and 113B are inserted into the notches 122Aa and 122Ba, respectively, while extending the openings of the notches 122Aa and 122Ba. The terminals 113A and 113B are respectively held by the terminals 122A and 122B in the openings of the terminals 122A and 122B, so that the terminals 113A and 113B are maintained in electrical and physical connection with the terminals 122A and 122B, respectively. As illustrated in Fig. 8, each of the terminals 113A and 113B has a tapered free end that decreases in thickness toward its extremity. Parts of the free ends of the terminals 122A and 122B are tapered such that the openings of the notches 122Aa and 122Ba increase in width toward the extremities of the free ends. This enhances the ease and reliability of insertion of the terminals 122A and 122B of the switch body 120 into the terminals 113A and 113B.

### [Exemplary Operation of Fitting Switch Body 120]

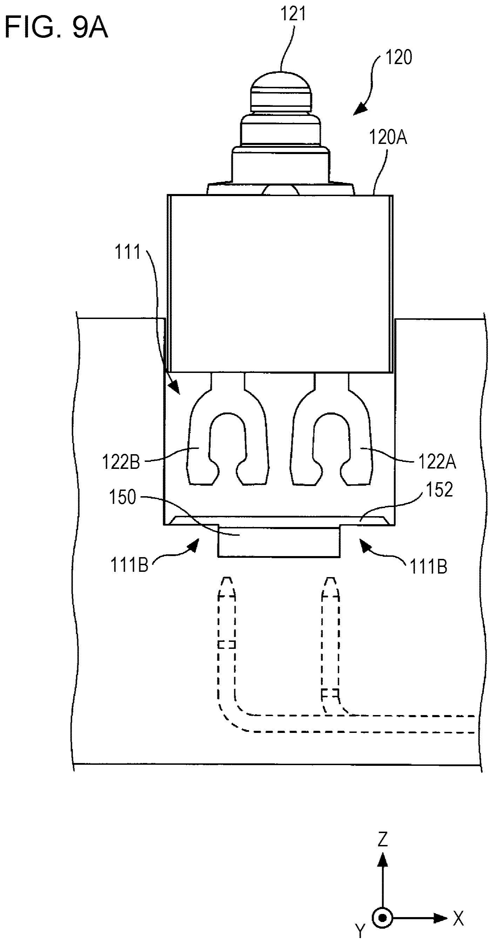

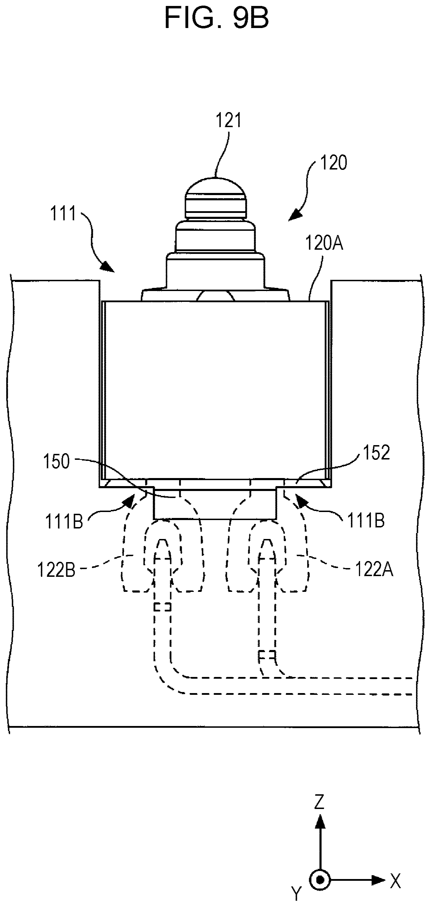

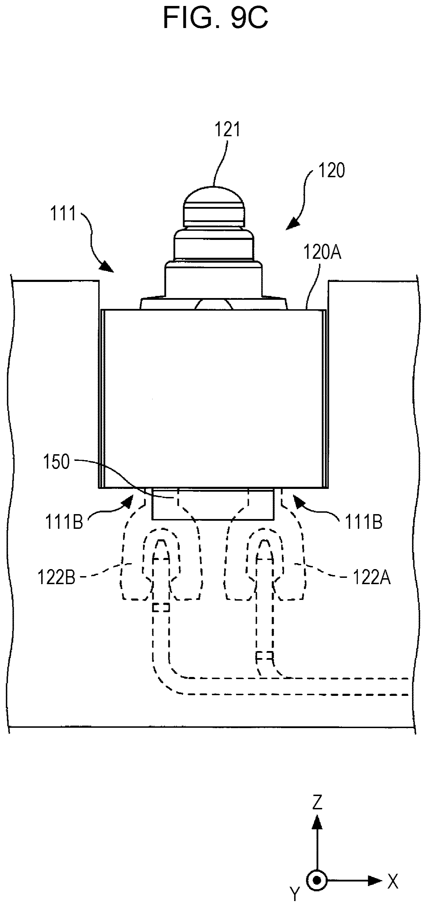

Figs. 9 are diagrams illustrating an exemplary operation of fitting the switch body 120 in the switch device 100 in accordance with an embodiment. Fig. 9A illustrates a state in which part of the casing 120A of the switch body 120 is inserted into the receiving portion 111. Fig. 9B illustrates a state in which the bottom of the casing 120A of the switch body 120 comes into contact with the protrusion 152 of the sealing member 150. Fig. 9C illustrates a state in which the bottom of the casing 120A of the switch body 120 comes into contact with the seats 111B.

As illustrated in Fig. 9A, when the switch body 120 is inserted into the receiving portion 111, the casing 120A of the switch body 120 is inserted into the receiving portion 111 before the terminals 122A and 122B of the switch body 120 reach the hole 151 of the sealing member 150. This enables the terminals 122A and 122B to extend through the hole 151 of the sealing member 150 while the switch body 120 is being positioned in a predetermined horizontal position (in the X-axis and Y-axis directions in the figures). In other words, this enables the terminals 122A and 122B to extend through the hole 151 without touching a portion other than the hole 151 of the sealing member 150. Therefore, this ensures that the terminals 122A and 122B easily extend through the hole 151 without shifting the sealing member 150 in the receiving portion 111.

As illustrated in Fig. 9A, the protrusion 152 of the sealing member 150 protrudes higher than the surfaces of the seats 111B in the receiving portion 111. When the switch body 120 is inserted into the receiving portion 111, as illustrated in Fig. 9B, the bottom of the casing 120A of the switch body 120 comes into contact with the protrusion 152 of the sealing member 150 before coming into contact with the seats 111B. In this state, when the switch body 120 is further pressed downward, as illustrated in Fig. 9C, the protrusion 152 of the sealing member 150 is pressed, so that the bottom of the casing 120A of the switch body 120 comes into contact with the surfaces of the seats 111B. Thus, the seats 111B inhibit downward movement of the switch body 120, so that the switch body 120 is reliably positioned at a predetermined level in the receiving portion 111 while pressing the protrusion 152 of the sealing member 150.

For example, it is assumed that the sealing member 150 has a thickness of 1.4 mm while being not pressed by the switch body 120 and the seats 111B have a height of 1.1 mm. In this case, the sealing member 150 has a thickness of 1.1 mm while being pressed by the switch body 120, thus reliably sealing the peripheries of the holes 114 and 115 between the switch body 120 and the bottom of the receiving portion 111.

### [Exemplary Operation of Fitting Retainer 130]

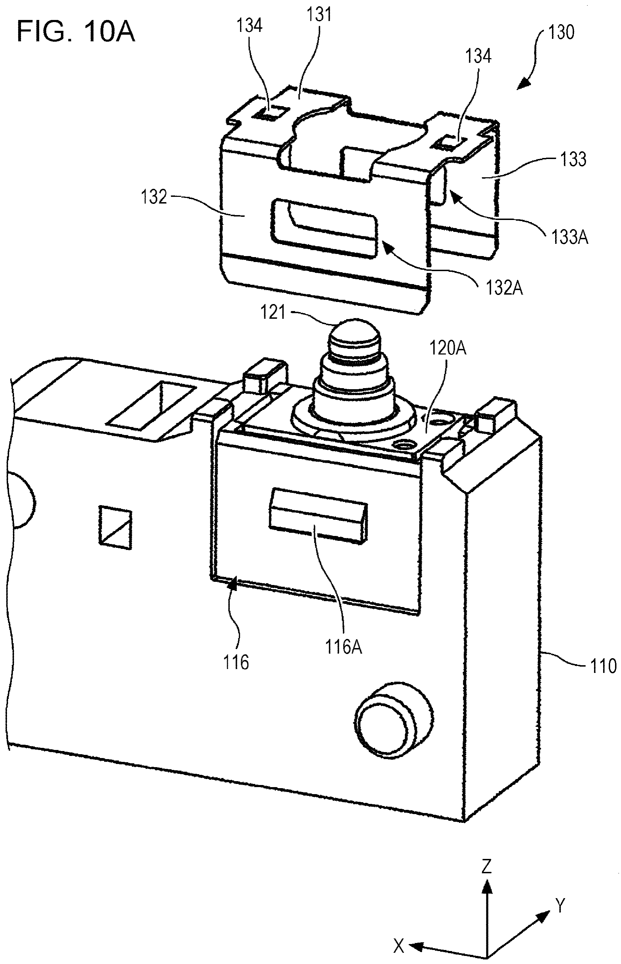

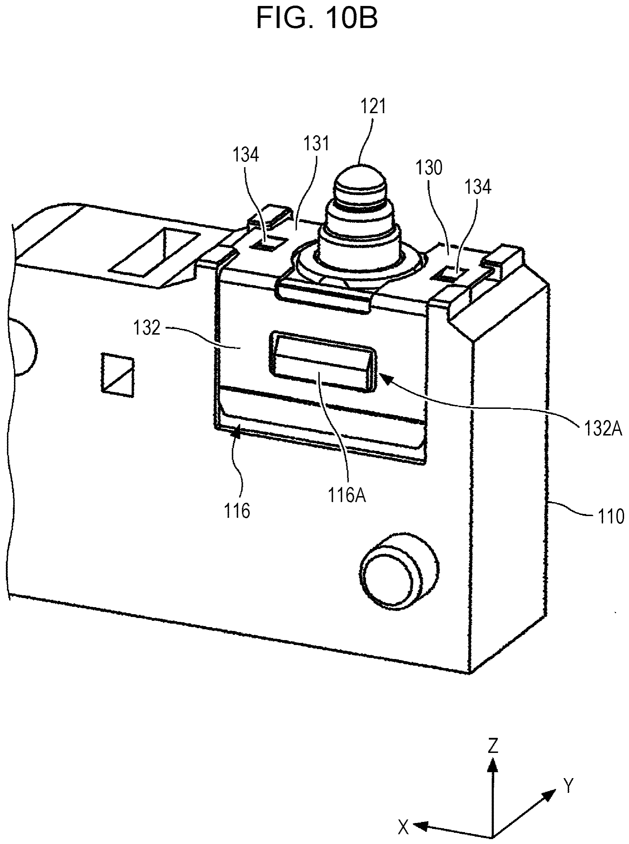

Figs. 10 are diagrams illustrating an exemplary operation of fitting the retainer 130 in the switch device 100 in accordance with an embodiment. Fig. 10A illustrates a state in which the retainer 130 is not fitted to the housing 110. Fig. 10B illustrates a state in which the retainer 130 is fitted to the housing 110.

As illustrated in Figs. 10, the retainer 130 includes a top portion 131, a side portion 132, and a side portion 133. The top portion 131 is a flat portion that is parallel to the top of the casing 120A of the switch body 120. The side portion 132 and the side portion 133 are flat portions that are parallel to each other and are also parallel to the opposite sides of the receiving portion 111 of the housing 110.

As illustrated in Figs. 10, the opposite sides of the receiving portion 111 of the housing 110 each have a guide groove 116 having substantially the same width as that of the side portion 132 and the side portion 133. To fit the retainer 130 to the housing 110, the side portion 132 and the side portion 133 of the retainer 130 are fitted into the guide grooves 116 in the opposite sides of the receiving portion 111 and are slid downward. When each of the side portion 132 and the side portion 133 reaches a predetermined position in the guide groove 116, a bulge 116A on the guide groove 116 is fitted into each of a hole 132A of the side portion 132 and a hole 133A of the side portion 133.

Consequently, the retainer 130 is fixed to the housing 110 as illustrated in Fig. 10B.

The top portion 131 of the retainer 130 includes two downwardly projecting projections 134, formed by denting the top portion 131, such that the switch body 120 is interposed between the projections 134. The projections 134 are examples of a "pressing part" described in the appended claims. In the state illustrated in Fig. 10B, the two projections 134 are in contact with the top of the casing 120A of the switch body 120, causing the top portion 131 of the retainer 130 to bend upward. The two projections 134 press the switch body 120 downward in response to reaction force from the bending top portion 131. Thus, the switch body 120 is stably fixed while pressing the sealing member 150 moderately in the receiving portion 111 of the housing 110 (namely such that the sealing member 150 prevents the entry of foreign matter).

In the state illustrated in Fig. 10A, the distance between the side portion 132 and the side portion 133 of the retainer 130 is slightly smaller than that between the opposite sides (or parts inwardly recessed by the guide grooves 116) of the receiving portion 111 of the housing 110. In the state illustrated in Fig. 10B, therefore, the distance between the side portion 132 and the side portion 133 is slightly increased by the opposite sides of the receiving portion 111. Thus, reaction force occurs in each of the side portion 132 and the side portion 133. The reaction force causes the side portion 132 and the side portion 133 to press against the opposite sides of the receiving portion 111. This prevents the retainer 130 from easily falling off the housing 110.

### [Open-Close Detector 200]

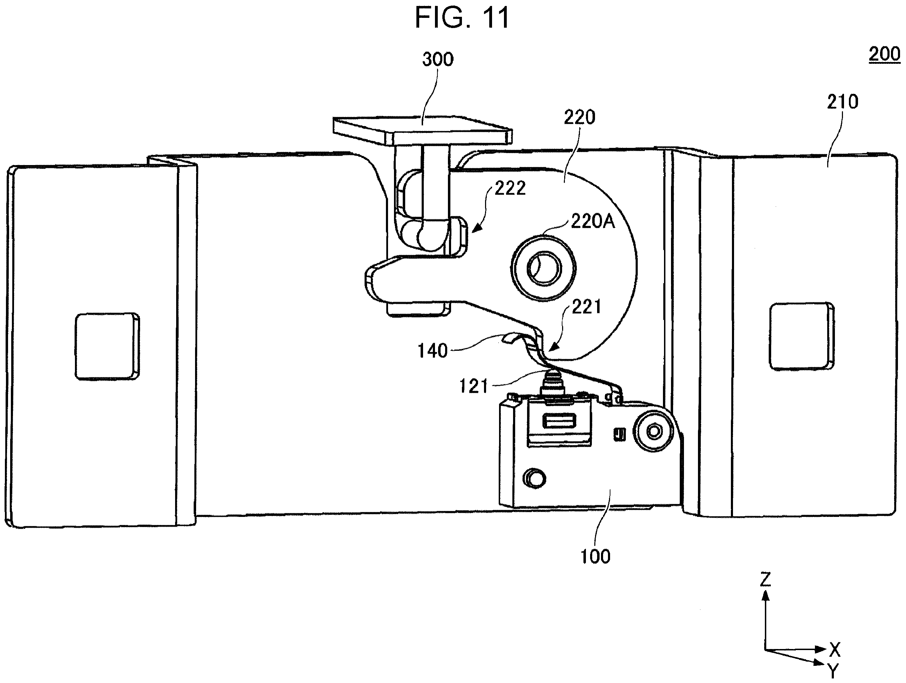

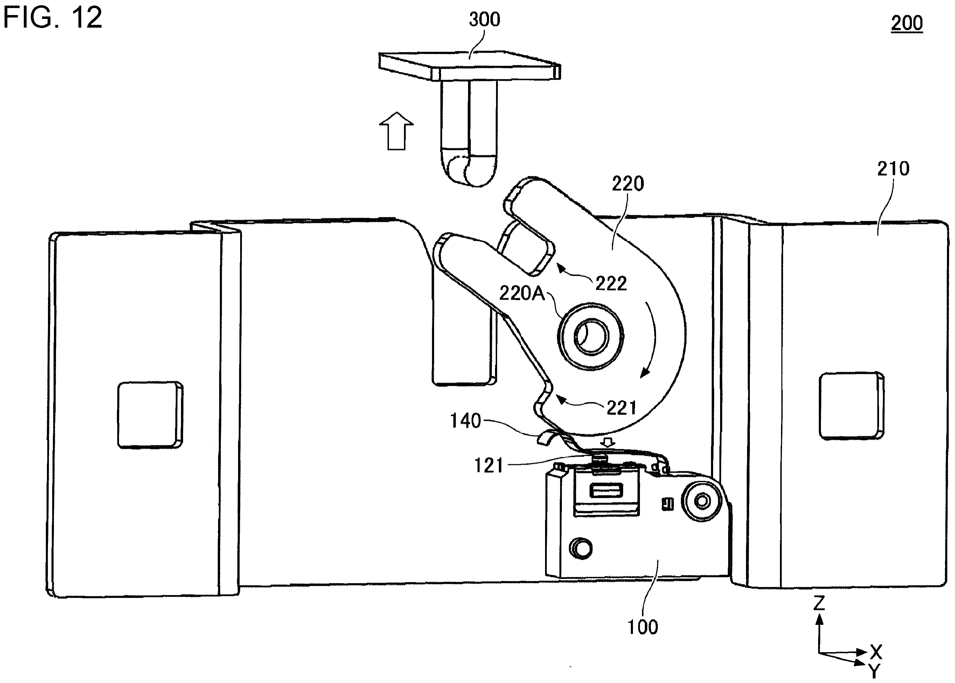

Fig. 11 is a perspective view of the appearance of an open-close detector 200 including the switch device 100 in accordance with an embodiment (in a state in which the bonnet or hood is closed). Fig. 12 is a perspective view of the appearance of the open-close detector 200 including the switch device 100 in accordance with an embodiment (in a state in which the bonnet or hood is opened).

The open-close detector 200 illustrated in Fig. 11 is a device to detect an open or closed state of the bonnet or hood of a vehicle. As illustrated in Fig. 11, the open-close detector 200 includes the switch device 100 in accordance with an embodiment, a base plate 210, and a cam plate 220.

The base plate 210, which is an example of a "fixing unit" described in the appended claims, is a member formed by processing a flat metal workpiece. The base plate 210 fixes the switch device 100 in proximity to the bonnet or hood of the vehicle. The base plate 210 rotatably supports the cam plate 220. The base plate 210 can have a shape suitable for the type of vehicle or a mounting position. In other words, the open-close detector 200 according to the embodiment can be used in various types of vehicles or various mounting positions by appropriately changing the shape of the base plate 210.

The cam plate 220, which is an example of a "transforming unit" described in the appended claims, is a flat metal member. The cam plate 220 includes a shaft 220A supported by the base plate 210. The cam plate 220 is thus rotatable about the shaft 220A. The cam plate 220 includes a U-shaped lever portion 222, which is engageable with a striker 300 of the bonnet or hood. The cam plate 220 is thus rotatable when the lever portion 222 is operated by the striker 300 in response to opening or closing movement of the bonnet or hood. The cam plate 220 further includes a cam portion 221, which protrudes radially farther than other portions. The cam portion 221 is a portion to press the lever 140 of the switch device 100 downward in response to rotation of the cam plate 220. The cam plate 220 with such a structure can transform opening or closing movement of the bonnet or hood into switching action of the switch body 120 included in the switch device 100.

As illustrated in Fig. 11, while the bonnet or hood is closed, the lever portion 222 of the cam plate 220 is in engagement with the striker 300 of the bonnet or hood. Thus, the cam plate 220 is maintained at a predetermined rotation angle. In such a state, the cam portion 221 of the cam plate 220 is located at a position where the cam plate 220 does not press the lever 140 of the switch device 100 downward. The switch device 100 is in the OFF state.

As illustrated in Fig. 12, when the bonnet or food is opened, the striker 300 of the bonnet or hood is moved upward, so that the lever portion 222 of the cam plate 220 is moved upward by the striker 300. Consequently, the cam plate 220 is rotated clockwise about the shaft 220A. At this time, the cam portion 221 of the cam plate 220 presses the lever 140 of the switch device 100 downward, so that the lever 140 presses the button 121 of the switch body 120 downward. Thus, the switch device 100 enters the ON state.

As described above, the switch device 100 according to the embodiment is configured such that, in the receiving portion 111 of the housing 110, the terminals 122A and 122B located on the bottom of the casing 120A of the switch body 120 and the terminals 113A and 113B exposed in the holes 114 and 115 arranged in the bottom of the receiving portion 111 are electrically and physically connected to each other through the hole 151 of the sealing member 150. In such a configuration, a simple operation of connecting the terminals 122A and 122B of the switch body 120 to the terminals 113A and 113B in the receiving portion 111 of the housing 110 allows the sealing member 150 to seal connections between these terminals. Therefore, the switch device 100 according to the embodiment can be provided as a switch device that exhibits highly reliable waterproof performance achieved at a lower production cost.

In the switch device 100 according to the embodiment, the bottom of the receiving portion 111 of the housing 110 has the recess 111A having a substantially cruciform shape, which is substantially the same as the outer shape of the sealing member 150. This enables the sealing member 150 to be easily and reliably placed at a predetermined position in a predetermined orientation in the receiving portion 111.

In addition, this reduces or eliminates the likelihood that the sealing member 150 placed in the receiving portion 111 may be shifted. In other words, this reduces or eliminates the occurrence of an accident, such as an increase in production steps or a reduction in waterproof performance, arising from poor placement of the sealing member 150. Therefore, the switch device 100 according to the embodiment can be provided as a switch device that exhibits highly reliable waterproof performance achieved at a lower production cost.

In the switch device 100 according to the embodiment, the bottom of the receiving portion 111 of the housing 110 includes the seats 111B, which are arranged around the recess 111A and have a surface located at a higher level than the recess 111A. Consequently, the seats 111B inhibit downward movement of the switch body 120, thus reliably positioning the switch body 120 at a predetermined level.

In other words, during assembly of the switch device 100, an operator does not need to adjust an amount by which the switch body 120 can be pressed. Such a configuration results in a reduction in production time and provides an appropriate amount by which the switch body 120 can be pressed. Therefore, the switch device 100 according to the embodiment can be provided as a switch device that exhibits highly reliable waterproof performance achieved at a lower production cost.

In the switch device 100 according to the embodiment, the seats 111B have a height smaller than the thickness of the sealing member 150. Such a configuration enables the sealing member 150 to be pressed moderately when the switch body 120 is pressed to the predetermined level. Consequently, the moderately pressed sealing member 150 reliably seals the connections between the terminals. In addition, such a configuration allows reaction force from the sealing member 150 to be moderate, reducing or eliminating the occurrence of an accident, for example, the likelihood that the switch body 120 may fall off due to an excessive reaction force from the sealing member 150. Therefore, the switch device 100 according to the embodiment can be provided as a switch device that exhibits highly reliable waterproof performance achieved at a lower production cost.

In the switch device 100 according to the embodiment, the sealing member 150 has a surface facing the bottom of the casing 120A of the switch body 120 and a surface facing the bottom of the receiving portion 111 and includes the circular protrusion 152 on each of the surfaces such that the protrusion surrounds the hole 151 of the sealing member 150 and the holes 114 and 115 arranged in the bottom of the receiving portion 111. Such a configuration enables the protrusion 152 of the sealing member 150 to be pressed moderately when the switch body 120 is pressed to the predetermined level. In other words, the moderately pressed protrusion 152 reliably seals the connections between the terminals. In addition, such a configuration allows reaction force from the sealing member 150 to be moderate, reducing a pressing force required to press the switch body 120 and reducing or eliminating the occurrence of an accident, for example, the likelihood that the switch body 120 may fall off due to an excessive reaction force from the sealing member 150. Therefore, the switch device 100 according to the embodiment can be provided as a switch device that exhibits highly reliable waterproof performance achieved at a lower production cost.

In the switch device 100 according to the embodiment, the terminals 122A and 122B of the switch body 120 and the terminals 113A and 113B exposed in the bottom of the receiving portion 111 are flat members orthogonal to each other. The terminals 113A and 113B are fitted in the notches 122Aa and 122Ba of the terminals 122A and 122B and are thus electrically and physically connected to the terminals 122A and 122B, respectively. Such a configuration allows the terminals to be relatively easily produced and enables the terminals to be relatively easily connected to the respective terminals when the switch body 120 is pressed downward. Therefore, the switch device 100 according to the embodiment can be provided as a switch device that exhibits highly reliable waterproof performance achieved at a lower production cost.

In the switch device 100 according to the embodiment, the opening of the receiving portion 111 has substantially the same shape (a substantially rectangular shape) as the outer shape of the casing 120A of the switch body 120. Consequently, in the receiving portion 111, the switch body 120 is maintained in a constant horizontal position by the inner wall surface of the receiving portion 111. This ensures that the terminals 122A and 122B of the switch body 120 easily extend through the hole 151 of the sealing member 150 in the receiving portion 111. Therefore, the switch device 100 according to the embodiment can be provided as a switch device that exhibits highly reliable waterproof performance achieved at a lower production cost.

In the switch device 100 according to the embodiment, the retainer 130 is attached to the housing 110 to fix the switch body 120 in the receiving portion 111 and press the switch body 120 from above with the projections 134 of the retainer 130. Thus, a simple operation of attaching the retainer 130 to the switch body 120 allows the switch body 120 to moderately press the sealing member 150 and thus allows the sealing member 150 to be easily and stably maintained in the pressed state. Therefore, the switch device 100 according to the embodiment can be provided as a switch device that exhibits highly reliable waterproof performance achieved at a lower production cost.

Although embodiments of the present invention are described herein, the present invention is not limited to these embodiments. It will be appreciated that many modifications and variations of the present invention are possible within the purview of the appended claims without departing from the scope of the invention.

For example, although the switch device according to the present invention is included in the open-close detector 200 for detecting the open or closed state of the bonnet or hood of the vehicle in the above-described embodiment, its application is not limited to this example. For example, the switch device according to the present invention can be included in another detector for detecting a state of a door (e.g., the boot or trunk lid or a door) other than the bonnet or hood of the vehicle. Furthermore, the switch device according to the present invention can be used not only for a vehicle but also for any other apparatus (e.g., an aircraft, a ship, an industrial machine, or a home electric appliance).

For example, in the switch device 100 according to the above-described embodiment, the shape of the bottom of the receiving portion 111 in the housing 110 and the outer shape of the sealing member 150 may be a shape other than a substantially cruciform shape.

For example, in the switch device 100 according to the above-described embodiment, the sealing member 150 may include the protrusion 152 on only either one of the surfaces or may include no protrusion 152.

For example, in the switch device 100 according to the above-described embodiment, the notches may be arranged in the terminals 113A and 113B exposed in the bottom of the receiving portion 111 instead of in the terminals 122A and 122B of the switch body 120.

For example, in the switch device 100 according to the above-described embodiment, terminals having any shape other than a flat shape may be used as the terminals 122A and 122B of the switch body 120 and the terminals 113A and 113B exposed in the bottom of the receiving portion 111.

For example, in the switch device 100 according to the above-described embodiment, the housing 110 may include, as a component for connection to an external wiring line, a connecting member (e.g., a lead wire) other than a connector instead of the connector portion 112.

For example, the switch device 100 according to the above-described embodiment may include no lever 140 (namely such that the button 121 of the switch body 120 is directly pressed from the outside) depending on an apparatus that includes the switch device 100.

For example, although the projections 134 (pressing parts) are formed by denting the top portion 131 of the retainer 130 in the switch device 100 according to the above-described embodiment, any pressing part may be formed in the top portion 131 in any other manner.

For example, the switch device 100 according to the above-described embodiment may include a switch body including three or more terminals instead of the switch body 120 including the two terminals, and the number of terminals arranged in the housing 110 may be changed accordingly.

For example, the switch device 100 according to the above-described embodiment may include another type of switch (e.g., a toggle switch or a rocker switch) instead of the switch body 120 (push-button switch).

### Reference Signs List

- 100: switch device
- 110: housing
- 111: receiving portion
- 111A: recess
- 111B: seat
- 112: connector portion
- 113A: terminal
- 113B: terminal
- 114: hole
- 115: hole
- 120: switch body
- 120A: casing
- 121: button
- 122A: terminal
- 122B: terminal
- 130: retainer
- 131: top portion
- 132: side portion
- 133: side portion
- 134: projection (pressing part)
- 140: lever
- 150: sealing member
- 151: hole
- 152: protrusion
- 200: open-close detector
- 210: base plate (fixing unit)
- 220: cam plate (transforming unit)
- 220A: shaft
- 221: cam portion
- 222: lever portion
- 300: striker

## Claims

1. A switch device comprising:
a housing (110) including a receiving portion (111) having an opening at the top of the receiving portion (111);
a switch body (120) received in the receiving portion (111); and
a sealing member (150) sandwiched between the bottom of the receiving portion (111) and the bottom of the switch body (120),
wherein, in the receiving portion (111), a terminal (122A, 122B) located on the bottom of the switch body (120) and a terminal (113A, 113B) exposed in a hole (114, 115) of the bottom of the receiving portion (111) are electrically and physically connected to each other through a hole (151) of the sealing member (150),
wherein the bottom of the receiving portion (111) has a recess (111A) having a shape substantially identical to the outer shape of the sealing member (150) in plan view,
wherein the sealing member (150) is placed in the recess (111A), and
wherein the sealing member (150) has a surface facing the bottom of the switch body (120) and a surface facing the bottom of the receiving portion (111) and includes a circular protrusion (152) on at least one of the surfaces such that the protrusion (152) surrounds the hole of the sealing member (150) and the hole of the bottom of the receiving portion (111),
**characterized in that**
the bottom of the receiving portion (111) includes a seat (111B) located around the recess (111A) and the seat (111B) has a surface located at a higher level than the recess (111A),
the seat (111B) has a height smaller than the thickness of the sealing member (150), and
the protrusion (152) of the sealing member (150) protrudes higher than the surfaces of the seats (111B) in the receiving portion (111).

2. The switch device according to Claim 1, wherein the outer shape of the sealing member (150) and the shape of the recess (111A) in plan view are substantially cruciform.

3. The switch device according to Claims 1 or 2,
wherein the terminal (122A, 122B) located on the bottom of the switch body (120) and the terminal (113A, 113B) exposed in the bottom of the receiving portion (111) are flat members orthogonal to each other, and one of the terminals (112A; 112B; 113A; 113B)) is fitted in a notch of the other terminal (113A; 113B; 112A; 112B) and is electrically and physically connected to the other terminal (113A; 113B; 112A; 112B).

4. The switch device according to any one of Claims 1 to 3, wherein the opening of the receiving portion (111) has a shape substantially identical to the outer shape of the switch body (120).

5. The switch device according to any one of Claims 1 to 4, further comprising:
a retainer (130) including a pressing part, the retainer (130) being attached to the housing (110) to fix the switch body (120) in the receiving portion (111) and press the switch body (120) from above with the pressing part.

6. A door with an open-close detector comprising:
the switch device (100) according to any one of Claims 1 to 5;
a fixing unit (210) configured to fix the switch device (100) in proximity to a door; and
a transforming unit (220) disposed between the door and the switch device (100), the transforming unit (220) being configured to transform opening or closing movement of the door into switching action of the switch body (120) included in the switch device (100).

7. The door according to Claim 6, wherein the door is the bonnet or hood of a vehicle.

## Patentansprüche

1. Eine Schaltvorrichtung umfassend:
ein Gehäuse (110) mit einem Aufnahmeabschnitt (111) mit einer Öffnung an der Oberseite des Aufnahmeabschnitts (111);
einen Schalterkörper (120), der in dem Aufnahmeabschnitt (111) aufgenommen ist; und
ein Dichtungselement (150), das zwischen der Unterseite des Aufnahmeabschnitts (111) und der Unterseite des Schalterkörpers (120) angeordnet ist,
wobei in dem Aufnahmeabschnitt (111) ein Anschluss (122A, 122B), der sich an der Unterseite des Schalterkörpers (120) befindet, und ein Anschluss (113A, 113B), der in einem Loch (114, 115) der Unterseite des Aufnahmeabschnitts (111) freiliegt, durch ein Loch (151) des Dichtungselements (150) elektrisch und physisch miteinander verbunden sind,
wobei die Unterseite des Aufnahmeabschnitts (111) eine Ausnehmung (111A) aufweist, deren Form in einer Draufsicht im Wesentlichen mit der Außenform des Dichtungselements (150) identisch ist,
wobei das Dichtungselement (150) in der Ausnehmung (111A) angeordnet ist, und
wobei das Dichtungselement (150) eine der Unterseite des Schalterkörpers (120) zugewandte Oberfläche und eine der Unterseite des Aufnahmeabschnitts (111) zugewandte Oberfläche aufweist und einen kreisförmigen Vorsprung (152) auf mindestens einer der Oberflächen aufweist, so dass der Vorsprung (152) das Loch des Dichtungselements (150) und das Loch der Unterseite des Aufnahmeabschnitts (111) umgibt,
**dadurch gekennzeichnet, dass**
die Unterseite des Aufnahmeabschnitts (111) eine Auflagefläche (111B) aufweist, die um die Ausnehmung (111A) herum angeordnet ist, und die Auflagefläche (111B) eine Oberfläche aufweist, die auf einem höheren Niveau als die Ausnehmung (111A) liegt,
die Auflagefläche (111B) eine geringere Höhe als die Dicke des Dichtungselements (150) hat, und
der Vorsprung (152) des Dichtungselements (150) höher als die Oberflächen der Auflageflächen (111B) im Aufnahmeabschnitt (111) herausragt.

2. Die Schaltvorrichtung nach Anspruch 1, wobei die Außenform des Dichtungselements (150) und die Form der Ausnehmung (111A) in der Draufsicht im Wesentlichen kreuzförmig sind.

3. Die Schaltvorrichtung nach Anspruch 1 oder 2, wobei der Anschluss (122A, 122B), der sich an der Unterseite des Schalterkörpers (120) befindet, und der Anschluss (113A, 113B), der in der Unterseite des Aufnahmeabschnitts (111) freiliegt, flache Elemente sind, die orthogonal zueinander sind, und einer der Anschlüsse (112A; 112B; 113A; 113B) in eine Kerbe des anderen Anschlusses (113A; 113B; 112A; 112B) eingepasst ist und elektrisch und physisch mit dem anderen Anschluss (113A; 113B; 112A; 112B) verbunden ist.

4. Die Schaltvorrichtung nach einem der Ansprüche 1 bis 3, wobei die Öffnung des Aufnahmeabschnitts (111) eine Form aufweist, die im Wesentlichen mit der Außenform des Schalterkörpers (120) identisch ist.

5. Die Schaltvorrichtung nach einem der Ansprüche 1 bis 4, ferner umfassend:
eine Halterung (130) mit einem Druckteil, wobei die Halterung (130) an dem Gehäuse (110) befestigt ist, um den Schalterkörper (120) in dem Aufnahmeabschnitt (111) zu fixieren und den Schalterkörper (120) von oben mit dem Druckteil zu drücken.

6. Eine Tür mit einem Auf-Zu-Detektor, umfassend:
die Schaltvorrichtung (100) nach einem der Ansprüche 1 bis 5;
eine Befestigungseinheit (210), die so konfiguriert ist, dass sie die Schaltvorrichtung (100) in der Nähe einer Tür befestigt; und
eine Umwandlungseinheit (220), die zwischen der Tür und der Schaltvorrichtung (100) angeordnet ist, wobei die Umwandlungseinheit (220) so konfiguriert ist, dass sie eine Öffnungs- oder Schließbewegung der Tür in eine Schaltaktion des in der Schaltvorrichtung (100) enthaltenen Schalterkörpers (120) umwandelt.

7. Die Tür nach Anspruch 6, wobei die Tür die Frontklappe oder Motorhaube eines Fahrzeugs ist.

## Revendications

1. Dispositif commutateur comprenant :
un boîtier (110) comportant une portion de réception (111) ayant une ouverture en haut de la portion de réception (111) ;
un corps de commutateur (120) reçu dans la portion de réception (111) ; et
un organe d'étanchéité (150) enserré entre le bas de la portion de réception (111) et le bas du corps de commutateur (120) ,
dans lequel, dans la portion de réception (111), une borne (122A, 122B) située sur le bas du corps de commutateur (120) et une borne (113A, 113B) exposée dans un orifice (114, 115) du bas de la portion de réception (111) sont connectées électriquement et physiquement l'une à l'autre à travers un orifice (151) de l'organe d'étanchéité (150),
dans lequel le bas de la portion de réception (111) a un évidement (111A) ayant une forme sensiblement identique à la forme extérieure de l'organe d'étanchéité (150) en vue en plan,
dans lequel l'organe d'étanchéité (150) est placé dans l'évidement (111A), et
dans lequel l'organe d'étanchéité (150) a une surface tournée vers le bas du corps de commutateur (120) et une surface tournée vers le bas de la portion de réception (111) et comporte une saillie circulaire (152) sur au moins l'une des surfaces de sorte que la saillie (152) entoure l'orifice de l'organe d'étanchéité (150) et l'orifice du bas de la portion de réception (111),
**caractérisé en ce que**
le bas de la portion de réception (111) comporte un siège (111B) situé autour de l'évidement (111A) et le siège (111B) a une surface située à un niveau plus haut que l'évidement (111A),
le siège (111B) a une hauteur plus petite que l'épaisseur de l'organe d'étanchéité (150), et
la saillie (152) de l'organe d'étanchéité (150) fait saillie plus haut que les surfaces des sièges (111B) dans la portion de réception (111).

2. Dispositif commutateur selon la revendication 1, dans lequel la forme extérieure de l'organe d'étanchéité (150) et la forme de l'évidement (111A) en vue en plan sont sensiblement cruciformes.

3. Dispositif commutateur selon les revendications 1 ou 2, dans lequel la borne (122A, 122B) située sur le bas du corps de commutateur (120) et la borne (113A, 113B) exposée dans le bas de la portion de réception (111) sont des organes plats orthogonaux l'un à l'autre, et l'une des bornes (112A ; 112B ; 113A ; 113B) est installée dans une encoche de l'autre borne (113A ; 113B ; 112A ; 112B) et est connectée électriquement et physiquement à l'autre borne (113A ; 113B ; 112A ; 112B) ;

4. Dispositif commutateur selon l'une quelconque des revendications 1 à 3, dans lequel l'ouverture de la portion de réception (111) a une forme sensiblement identique à la forme extérieure du corps de commutateur (120).

5. Dispositif commutateur selon l'une quelconque des revendications 1 à 4, comprenant en outre :
un élément de retenue (130) comportant une partie d'enfoncement, l'élément de retenue (130) étant attaché au boîtier (110) pour fixer le corps de commutateur (120) dans la portion de réception (111) et enfoncer le corps de commutateur (120) par le dessus avec la partie d'enfoncement.

6. Porte dotée d'un détecteur d'ouverture-fermeture comprenant :
le dispositif commutateur (100) selon l'une quelconque des revendications 1 à 5 ;
une unité de fixation (210) configurée pour fixer le dispositif commutateur (100) à proximité d'une porte ; et
une unité de transformation (220) disposée entre la porte et le dispositif commutateur (100), l'unité de transformation (220) étant configurée pour transformer un mouvement d'ouverture ou de fermeture de la porte en action de commutation du corps de commutateur (120) inclus dans le dispositif commutateur (100).

7. Porte selon la revendication 6, dans laquelle la porte est le capot-moteur ou capot d'un véhicule.
